# FASCICULE DE BREVET EUROPEEN

(11) **EP 1 590 189 B1**
(45) Date de publication et mention de la délivrance du brevet: **07.06.2006**
(21) Numéro de dépôt: 04703148.9
(22) Date de dépôt: 19.01.2004
(51) Int. Cl.: B60C 13/00, B60C 23/04, C09J 5/00

(54) **FIXATION D'UN ELEMENT RIGIDE SUR UN PNEUMATIQUE**
BEFESTIGUNG EINES STARREN ELEMENTS AN EINEM REIFEN
MOUNTING A RIGID ELEMENT ON A TYRE

(30) Priorité: 23.01.2003 FR 0300752
(43) Date de publication de la demande: 02.11.2005
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: PEYRON, Georges, F-63200 Riom (FR); COTTIN, Alain, F-63100 Clermont-Ferrand (FR)
(74) Mandataire: Dequire, Philippe Jean-Marie Denis
(86) Numéro de dépôt international: PCT/EP2004/000342
(87) Numéro de publication internationale: WO 2004/065140

(56) Documents cités:
- EP-A- 0 829 382
- US-B1- 6 477 894
- PATENT ABSTRACTS OF JAPAN vol. 018, no. 589 (M-1701), 10 novembre 1994 (1994-11-10) & JP 06 219109 A (BRIDGESTONE CORP), 9 août 1994 (1994-08-09)
- PATENT ABSTRACTS OF JAPAN vol. 018, no. 576 (M-1697), 4 novembre 1994 (1994-11-04) & JP 06 211007 A (YOKOHAMA RUBBER CO LTD:THE), 2 août 1994 (1994-08-02)
- PATENT ABSTRACTS OF JAPAN vol. 009, no. 268 (M-424), 25 octobre 1985 (1985-10-25) -& JP 60 113704 A (BRIDGESTONE KK), 20 juin 1985 (1985-06-20)

## Description

L'invention concerne l'application de revêtements et/ou d'éléments à la surface d'articles en caoutchouc, notamment les pneumatiques. Plus particulièrement, elle concerne l'application de ces éléments et/ou revêtements après la vulcanisation de ces articles. L'invention concerne notamment le marquage, coloré ou non, d'une partie de la surface d'un pneumatique par application d'un élément rigide ou non-rigide et/ou d'un revêtement.

Les pneumatiques peuvent porter, à des fins décoratifs ou d'identification, un marquage, coloré ou non, directement appliqué sur une partie de la surface généralement extérieure du pneumatique. On entend par "marquage" dans le texte, tout élément ou revêtement apposé sur ladite surface du pneumatique, généralement après sa vulcanisation. Ce marquage peut-être constitué d'un élément dit rigide, d'un élément mou, d'une couche de vernis, d'une couche de peinture...

On entend par "élément rigide", des éléments incapables de suivre les déformations successives d'un pneumatique lors de son roulage. Ces éléments dits rigides peuvent être selon le cas, totalement indéformables ou encore souples mais non élastiques à l'êchelle des déformations du pneumatique. En d'autres termes, ils peuvent, le cas échéant, se plier mais être incapables de suivre les variations locales de l'aire de la surface du pneumatique consécutives aux changements de rayons de courbure dudit pneumatique. Ces éléments peuvent être constitués de métal, de plastique, d'élastomère, de céramique...

Le marquage d'un pneumatique, réalisé en un matériau approprié, peut être d'une ou de plusieurs couleurs y compris le blanc.

Or, la réalisation de marquages, colorés ou non, sur des pneumatiques pose de grandes difficultés.

De tels marquages sont destinés à recouvrir au moins une partie de la surface de pneumatiques. Dans la mesure où il s'agit d'une couverture de surface, ces marquages sont plus particulièrement destinés à recouvrir des surfaces d'enveloppes de pneumatiques dites "non-usantes", c'est-à-dire qui ne sont pas au contact de la route dans des conditions normales d'utilisation desdits pneumatiques. Ainsi, de tels marquages colorés ayant des fins notamment décoratives et d'identification, pourront constituer au moins partiellement la surface extérieure d'un flanc d'enveloppe de pneumatique ou des fonds de sculptures de la bande de roulement.

La complexité de revêtir directement la surface de pneumatiques de tels marquages est bien connue de l'homme de l'art. Il existe en effet, deux difficultés majeures à cette réalisation, d'une part la nature des compositions dans le pneumatique qui agit sur les marquages comme on va le voir plus explicitement dans ce qui suit et, d'autre part, les sollicitations auxquelles est soumis le pneumatique lors de son roulage qui entraînent des déformations importantes du pneumatique et donc de sa surface, auxquelles les marquages doivent pouvoir s'adapter.

Les vulcanisats de caoutchoucs diéniques, naturels comme synthétiques, en raison de la présence de doubles liaisons sur leurs chaînes moléculaires, sont susceptibles de se détériorer plus ou moins rapidement après une exposition prolongée à l'atmosphère, en raison de mécanismes connus d'oxydation et d'ozonolyse. Ces mécanismes de dégradation sont en outre accélérés sous l'action conjuguée de la chaleur par thermo-oxydation, ou encore de celle de la lumière par photo-oxydation (voir par exemple : *"Photo-oxydation and stabilisation of polymers",* Trends in Polym. Sci., Vol. 4, No 3, 1996; 92-98 ; *"Degradation mechanisms of rubbers",* Int. Polym. Sci. and Technol., Vol 22, No 12, 1995,47-57).

Tous ces phénomènes de dégradation du pneumatique, liés à son vieillissement, ont pu être peu à peu inhibés grâce à la mise au point et à l'introduction dans les compositions de caoutchouc diénique destinées à la fabrication de pneumatiques, de divers agents antidégradants tels que des agents antioxydants ou antiozonants. On a même trouvé des composés pouvant remplir simultanément ces deux fonctions ; les plus efficaces, à la fois comme antioxydants et antiozonants, sont de manière connue des dérivés de la quinoléine, comme par exemple la 2,2,4-triméthyl-1,2-dihydroquinoléine ("TMQ") ou des dérivés de la p-phénylènediamine ("PPD") encore plus actifs que les premiers, tels que par exemple la N-1,3-diméthylbutyl-N'-phényl-p-phénylènediamine ("6-PPD") ou la N-isopropyl-N'-phényl-p-phénylènediamine ("I-PPD"). Ces antidégradants type TMQ et PPD, parfois même associés, sont aujourd'hui très répandus et utilisés de manière quasi-systématique dans les compositions de caoutchouc diéniques conventionnelles chargées au moins en partie de noir de carbone leur donnant leur couleur noire caractéristique.

Or, les agents cités ci-dessus, et en particulier les dérivés TMQ ou PPD, ne sont pas stables à la lumière et, sous l'effet du rayonnement U.V., génèrent des espèces chimiques colorées qui provoquent une altération de la couleur des compositions de caoutchouc les contenant, les tachant de brun sombre.

En outre, les agents antidégradants sont mobiles à l'échelle moléculaire au sein de la composition de caoutchouc les contenant. Cette mobilité s'étend aux compositions adjacentes à celle contenant initialement les agents antidégradants. Ainsi, ces agents antidégradants sont susceptibles de migrer dans une composition de marquage colorée, apposée sur la composition de caoutchouc les contenant, et de la tâcher

Par ailleurs, pour limiter la dégradation due à l'ozone, les compositions élastomériques incorporent également couramment des cires qui apportent, en statique, un complément de protection par rapport aux agents anti-ozonants par la formation d'un revêtement protecteur en surface. Cependant les cires qui se caractérisent également par leur aptitude à migrer jusqu'à la surface des articles en caoutchouc, modifient l'aspect extérieur des surfaces des compositions élastomériques en les tâchant ou en les rendant ternes et grises. On appelle ce phénomène 1 "'efflorescence" des cires.

C'est pourquoi, il est fort complexe réaliser un marquage d'aspect durable, coloré ou non, destiné à recouvrir une partie de la surface extérieure d'enveloppes de pneumatiques résistant au tachage et à l'altération due aux agents antioxydants, anti-ozonants et aux cires présents dans les compositions élastomériques utilisées dans les pneumatiques.

La plupart des solutions proposent la mise au point de marquages de couleur dont la composition réunit à la fois les divers constituants permettant l'obtention de la couleur et la non-migration de cires ou de produits tachants. Mais il est également nécessaire comme on l'a dit que le marquage soit capable d'endurer les sollicitations mécaniques auxquelles le pneumatique est soumis.

Or les solutions, accessibles aujourd'hui, à ces deux problèmes sont souvent antagonistes et ne sont donc pas satisfaisantes pour améliorer le compromis aspect durable / résistance aux sollicitations mécaniques. En effet,
- lorsque le revêtement est suffisamment souple pour s'accommoder des déformations répétées tout au long de la vie du pneumatique, les mobilités moléculaires y sont trop importantes pour empêcher totalement les migrations des produits tachant ;
- lorsque le revêtement est rigide, freinant ainsi la mobilité moléculaire, il n'est plus capable de suivre les déformations du pneumatique sans provoquer des concentrations de contraintes trop importantes qui selon le cas se traduiront par un détachement ou une rupture du revêtement.

Il s'avère donc nécessaire pour obtenir un marquage durable, de pouvoir au moins réduire, voire supprimer, l'altération de la couleur et/ou de la brillance du marquage apposé sur la surface extérieure d'un pneumatique, tout en lui conférant une capacité de s'accommoder des déformations du pneumatique.

La demanderesse a découvert de façon surprenante qu'une façon de résoudre à la fois le problème d'ordre chimique et le problème d'ordre mécanique liés au marquage d'un pneumatique, consiste à intercaler entre la partie de la surface du pneu à marquer et l'élément ou/et le revêtement de marquage une couche de mousse. La couche de mousse et l'élément ou/et le revêtement de marquage forment un empilement de deux couches appelé ci-après dans le texte, applique.

Par ailleurs, on cherche de plus en plus à stocker des informations sur des puces électroniques intégrées ou fixées au pneumatique, et à opérer des mesures notamment surveillance de pression et/ou de température qui nécessitent l'emploi de capteurs ou d'autres systèmes de connexion, de communication, de transmission ou de réception de signaux. Ces dispositifs qui nécessitent des supports rigides, posent de réels problèmes de fixation sur le pneumatique puisqu'ils ne peuvent suivre les déformations du pneumatique. C'est pourquoi la solution apportée par l'invention permet également de surmonter les problèmes de fixation de ces dispositifs sur le pneu.

Le document JP-06 219 109, conforme au préambule de la revendication 1, divulgue une couche inférieure constituée d'une mousse pour protéger les flancs.

En conséquence un premier objet de l'invention consiste en un pneumatique comprenant sur au moins une partie de sa surface au moins une applique, caractérisé en ce que ladite applique est composée d'une première couche en contact avec l'air constituant la couche supérieure de l'applique et d'une deuxième couche en contact avec le pneumatique constituant la couche inférieure de l'applique, ladite couche inférieure de l'applique étant constituée d'une mousse de faible densité apparente et très déformable.

Dans le texte, pour un empilement de couches, on adoptera la terminologie "inférieure" pour désigner la couche/surface en contact avec le pneu et la plus proche de la nappe carcasse et "supérieure" pour désigner la couche/surface la plus éloignée de la nappe carcasse, notamment en contact avec l'air.

La solution apportée par les inventeurs d'intercaler une mousse entre la surface du pneumatique et l'élément et/ou le revêtement de marquage, permet un découplage chimique pour éviter les échanges chimiques par migration et donc le tachage dudit revêtement et/ou élément, sans qu'il soit nécessaire que ce dernier possède lui-même des caractéristiques d'imperméabilité, et à réaliser simultanément un découplage mécanique afin de préserver la fixation dudit revêtement et/ou élément et sa forme.

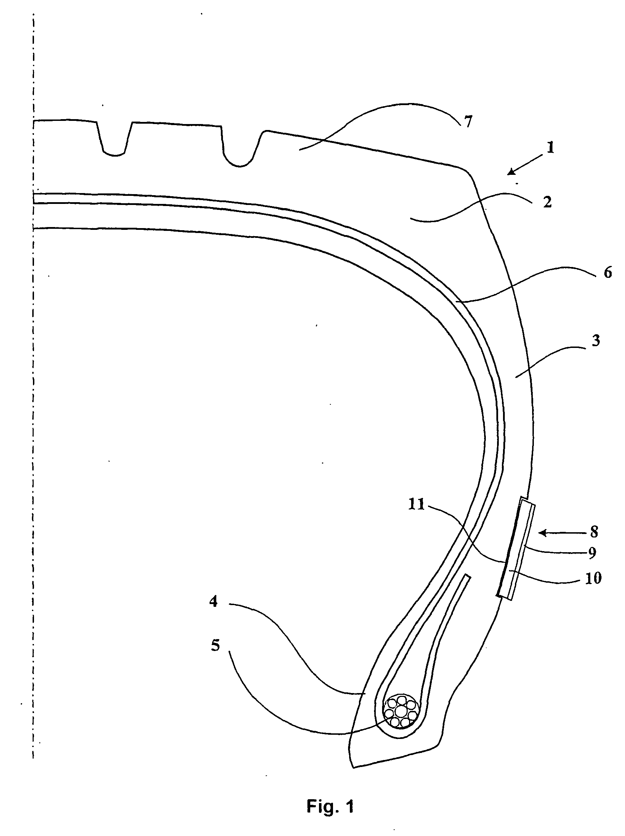

D'autres caractéristiques et avantages de l'invention apparaîtront à la lecture d'un exemple de réalisation d'un pneumatique conforme à l'invention, en référence au dessin annexé dans lequel la figure unique représente une demi-coupe radiale d'un pneumatique portant un marquage conformément à l'invention, ainsi qu'à la lecture du procédé de fixation sur le pneumatique d'un revêtement et/ou d'un élément de marquage conforme à l'invention.

Le marquage d'un pneumatique constitue un aspect de l'invention. C'est aspect est décrit ici à titre purement exemplatif et ne saurait constituer une limitation de l'invention. L'homme de l'art comprendra que l'invention comprend également la fixation sur la surface du pneu d'un élément et/ou d'un revêtement destiné à d'autres fins que le marquage, tels que la fixation de dispositifs de contrôle, de mesure...

Ainsi, à titre d'exemple, la figure annexée représente de manière schématique une demi-coupe radiale d'un pneumatique 1 à armature de carcasse. Ce pneumatique 1 comporte sur la figure un sommet 2, un flanc 3, un bourrelet 4, une armature de carcasse 6 s'étendant d'un bourrelet à l'autre. Le sommet 2 est surmonté d'une bande de roulement 7. L'armature de carcasse 6 est enroulée autour des deux tringles 5 (une seule étant représentée sur la demi-coupe de la figure)dans chaque bourrelet 4.

L'invention concerne ainsi un pneumatique 1 comprenant sur au moins une partie de sa surface au moins une applique 8 conforme à l'invention. La partie du pneumatique sur laquelle est fixée l'applique selon l'invention présente une composition de caoutchouc à base d'au moins un élastomère diénique essentiellement saturé, d'au moins un élastomère diénique essentiellement insaturé ou encore d'un mélange de ces deux types d'élastomères. La composition de caoutchouc peut contenir des additifs classiques et notamment les agents de protection contre l'ozone, l'oxydation...

Par élastomère "diénique", on entend de manière connue un élastomère issu au moins en partie (i.e. un homopolymère ou un copolymère) de monomères diènes (monomères porteurs de deux doubles liaisons carbone-carbone, conjuguées ou non). Ces élastomères diéniques peuvent être classés dans deux catégories : "essentiellement insaturés" ou "essentiellement saturés".

De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles).

C'est ainsi, par exemple, que des élastomères diéniques tels que les caoutchoucs butyle ou les copolymères de diènes et d'alpha-oléfines type EPDM (terpolymère éthylène-propylène-diène) n'entrent pas dans la définition précédente et peuvent être notamment qualifiés d'élastomères diéniques "essentiellement saturés" (taux de motifs d'origine diénique faible ou très faible, toujours inférieur à 15%).

Selon un mode de réalisation de l'invention, la partie du pneumatique sur laquelle est fixée l'applique selon l'invention est le flanc du pneumatique. La figure en annexe illustre ce mode de réalisation et plus particulièrement une fixation de l'applique 8 sur la partie radialement inférieure du flanc 3. La composition de cette partie du pneumatique peut alors contenir au moins un élastomère diénique essentiellement saturé, en particulier au moins un copolymère EPDM, que ce copolymère soit par exemple utilisé ou non en mélange avec un ou plusieurs des élastomères diéniques essentiellement insaturés.

Selon un autre mode de réalisation de l'invention, la partie du pneumatique sur laquelle est fixée l'applique selon l'invention est une gomme intérieure de pneumatique ou toute autre couche ou objet imperméable à l'air. La composition de cette partie du pneumatique peut alors contenir au moins un élastomère diénique essentiellement saturé de type copolymère d'isobutène et d'isoprène (caoutchouc butyle), ainsi que les versions halogénées de ces copolymères.

Selon encore un autre mode de réalisation de l'invention, la partie du pneumatique sur laquelle est fixée l'applique selon l'invention est la bande de roulement, notamment les fonds de sculpture de la bande de roulement. La composition de cette partie du pneumatique peut alors contenir au moins un élastomère diénique essentiellement insaturé.

Par référence à la figure, l'applique 8 conforme à l'invention comprend ainsi une première couche 9 en contact avec l'air constituant la couche supérieure de l'applique et une deuxième couche 10 en contact avec le pneumatique constituant la couche inférieure de l'applique. Cette couche inférieure 10 de l'applique est constituée d'une mousse de faible densité apparente et très déformable. Elle permet le découplage chimique et mécanique entre la surface du pneumatique et la couche supérieure de l'applique, constituant l'élément et/ou le revêtement de marquage.

La couche de mousse composant la couche inférieure 10 de l'applique 8 selon l'invention, est constituée d'une mousse de faible densité ayant un taux de vide élevé. Ceci permet de s'opposer aux migrations chimiques et ainsi d'empêcher ou de très fortement limiter les migrations des agents tachants contenus dans le mélange élastomérique constitutif de la partie du pneumatique sur laquelle est fixée l'applique du pneumatique. En effet, le taux de vide élevé et la faible densité entraîne une diminution de la section de passage et l'allongement du trajet tout au long des parois des cellules de la mousse dans toute l'épaisseur de la mousse. Bien entendu, cet effet est également étroitement lié à l'épaisseur de la couche de mousse.

La limitation de la migration des agents tachants peut être renforcée par un choix judicieux du matériau constitutif de la mousse qui pourra présenter des caractéristiques d'imperméabilité du matériau de la mousse vis-à-vis des migrants.

Par ailleurs, l'avantage d'une mousse est clairement d'avoir suffisamment de souplesse de structure pour suivre les déformations du pneumatique.

On pourra ainsi choisir différentes natures de matériau pour former cette mousse, son épaisseur, son taux de vide et sa densité étant comme on vient de le dire directement liées à ce choix.

De manière générale, la couche de mousse pourra présenter une épaisseur d'au moins 0,5 mm. En dessous de cette valeur, le découplage chimique et mécanique ne serait pas suffisant pour permettre un marquage durable de part son aspect et sa tenue.

De manière générale, lorsque l'applique est fixée sur une partie de la surface extérieure du pneumatique, elle ne pourra saillir de plus de 3 mm de la surface du pneumatique. La surface extérieure du pneumatique est la surface visible du pneumatique qui n'est pas en contact avec l'air de gonflage. En effet, l'applique en saillie du pneumatique 1 au-delà de cette valeur de 3 mm augmenterait fortement le risque d'arrachage de ladite applique.

De manière générale, lorsque l'applique est fixée sur une partie de la surface orientée vers la cavité du pneu, notamment sur la gomme intérieure, elle pourra présenter une épaisseur bien supérieure à 3 mm. Mais, un poids trop important fixé sur l'intérieur du pneu aurait pour conséquence de le déséquilibrer trop fortement. Ainsi, l'épaisseur de l'applique dépendra également de la densité de la mousse et de la nature de la couche supérieure. A titre d'exemple, on pourra néanmoins envisager des appliques d'épaisseur allant jusqu'à environ 3 cm pour une fixation sur une partie de la surface orientée vers la cavité du pneu.

Selon un mode de réalisation avantageux de l'invention illustré par la figure, en vue d'un ancrage de l'applique 8 et donc d'une meilleure fixation de l'applique 8, celle-ci sera fixée dans une cavité 11 de dimension appropriée, ménagée à cet effet dans le pneumatique 1. Cette cavité qui présente une profondeur au plus égale à l'épaisseur de l'applique 8, est avantageusement formée lors du moulage du pneumatique 1.

De manière générale, la mousse pourra présenter une masse volumique d'au moins 0,02 g/cm³, mesurée de manière classique. En dessous de cette limite la mousse ne présenterait pas de tenue mécanique suffisante. C'est à dire qu'en dessous de cette valeur, la mousse se déformerait trop facilement, et, sous l'effet de la force centrifuge, elle risquerait de se déchirer. La mousse pourra présenter une masse volumique allant jusqu'à 0,50 g/cm³. A titre d'exemple, la masse volume de la mousse pourra aller de 0,05 g/cm³ à 0,30 g/cm³.

De manière générale, la rigidité de la mousse sera avantageusement inférieure à la rigidité du matériau de plus faible rigidité à découpler. Préférentiellement, cette différence devra être d'au moins 50 %. Encore plus préférentiellement, la rigidité de la mousse devra être au moins 3 fois plus petite que la rigidité du matériau de plus faible rigidité à découpler. La rigidité est exprimée par le module d'extension à 10% d'élongation, mesuré de manière classique.

Une autre caractéristique de la mousse utilisable dans le cadre de l'invention est son taux de vide. De manière générale selon l'invention, le taux de vide sera avantageusement d'au moins 40 % pour que la mousse soit suffisamment compressible. Ce taux de vide peut-être calculé en comparant la masse volumique de la mousse avec celle du matériau compact constituant sa matrice, mesurée par tout moyen classique.

La mousse constituant la couche inférieure de l'applique selon l'invention présentera l'une au moins des caractéristiques définies ci-dessus. Elle présentera avantageusement au moins deux de ces caractéristiques et, plus avantageusement encore, elle présentera les caractéristiques suivantes :
- un taux de vide d'au moins 40 %,
- une épaisseur d'au moins 0,5 mm,
- une masse volumique allant de 0,02 g/cm³ à 0,5 g/cm³.

Néanmoins, les caractéristiques de la mousse nommées ci-dessus dépendent également de la nature des matériaux pour former cette mousse. L'homme du métier saura déterminer les caractéristiques requises pour un matériau donné.

On pourra ainsi choisir une mousse élastomérique pour laquelle une masse volumique spécifique de 0,05 à 0,40 g/cm³ représente un bon compromis de travail. On pourra se situer plus particulièrement entre 0,1 et 0,3 g/cm³ , par exemple allant de 0,1 à 0,25 g/cm³.

Parmi les matériaux pouvant constituer la matrice de ces mousses élastomériques, on peut citer :
- les élastomères thermodurcissables tels que caoutchouc naturel, polyisoprène, polybutadiène, butadiène-stryrène, butyles, butyles halogénés polycholoroprène, polyépichloridrines, polyacryliques, polysulfures, polyéthylènes chlorés, polyéthylènes chlorosulfonés, polyéthylènes alkylchlorosulfonés, EPT, (éthylène propylène termonomère) EPDM (terpolymère éthylène-proplène-diène), nitrile (NBR) et nitrile hydrogénés (HNBR), silicones, élastomères fluorés etc... ;
- Les polyuréthanes, polyurées, polyuréthane-urées ;
- Les élastomères thermoplastiques à base de polymères-blocs tels que les styréniques (SBS, SEBS, MBS, ...) les polyétheramides (PEBA, ...) , les polyéther d'esters et copolyesters, les polyuréthanes thermoplastiques (TPU), vinyliques (copolymères éthylène acétate de vinyle, ...), etc... ;
- les élastomères thermoplastiques à base d'alliages élastomères ou mélanges tels que les TPO (oléfines thermoplastiques : EPDM+polypropylène EPDM+polyéthylène HD, polychlorure de vinyle+polyacétate de vinyle, TPU+polycarbonate, caoutchouc naturel ou polyisoprène+polypropylène, NBR+polychlorure de vinyle ;
- les élastomères thermoplastiques réticulés.

On notera que les mousses composées d'au plus 80% d'élastomères butyles sont particulièrement avantageuses du fait de leur très bonne imperméabilité aux agents tachants. Notons que ce taux maximum de butyle est lié à l'obtention d'un bon collage sur des surfaces constituées d'élastomères diéniques essentiellement insaturés.

On pourra également choisir des mousses non élastomériques pour lesquelles il sera intéressant de choisir une masse volumique spécifique plus faible de l'ordre de 0,02 à 0,10 g/cm³.

On peut ainsi citer à titre de mousses non élastomériques, des plastiques usuels choisis parmi les polyoléfines, polyvinyliques, styréniques, acryliques, polyacétals, polyamides, polyesters, polycarbonates, polyoxyphénylènes, polysulfures de phénylène, polyimides, polysulfones, polycyclooléfines, polycétones, ... ainsi que leurs mélanges et alliages.

On pourra choisir des mousses à cellules fermées ou ouvertes. Dans le cas de mousse à cellules ouvertes une peau devra entourer la couche de mousse afin d'éviter des possibilités de pénétration d'eau lorsqu'il s'agit d'une applique sur la surface extérieure du pneumatique. Cette peau pourra être formée lors de la fabrication de la mousse (mousse intégrale) ou appliquée ultérieurement (par collage, vernissage, ...)

Dans le cas d'une mousse à cellules fermées, la peau est moins indispensable mais pourra être utile pour avoir une surface plus lisse donc plus esthétique et plus facile à décorer.

Pour les applications intérieures au pneumatique, notamment sur la gomme intérieure, la mousse de découplage sera de préférence à cellules ouvertes pour ne pas être soumise à une compression par l'air de gonflage.

L'élément et/ou le revêtement constituant la couche supérieure 9 de l'applique 8 à apposer sur le pneumatique 1, pourra se présenter sous forme :
- d'une couche souple que l'on veut découpler chimiquement pour éviter les migrations d'agents constitutifs de la composition de caoutchouc composant la partie du pneumatique sur laquelle l'élément et/ou le revêtement de marquage est apposé, et/ou découpler mécaniquement pour éviter tout délaminage, fissuration.... Ce peut-être une couche de mélange élastomérique, colorée ou non, une couche de peinture élastomérique, une couche de vernis élastomérique, coloré ou non ... ;
- d'un élément rigide essentiellement décoratif, à découpler mécaniquement et éventuellement chimiquement. Il peut par exemple être constitué d'une couche de peinture rigide, d'une couche de vernis rigide, coloré ou non, d'une plaque, d'une feuille, d'un tissu, d'une nappe, d'un objet moulé, usiné, ... en n'importe quel matériau élastomérique, plastique, céramique ou métallique, nu ou décoré ce qui permet le choix de n'importe quel motif ou couleur. Il apparaît avantageux d'effectuer le marquage avec des éléments dits rigides plutôt que mous, d'une part parce qu'il est possible d'obtenir des objets d'aspect durable par emboutissage, injection...La rigidité de ces objets diminue sensiblement la mobilité moléculaire.
- d'un élément fonctionnel rigide tel que par exemple, comprenant notamment un dispositif électronique, tel qu'un capteur, une puce électronique, un faisceau d'alimentation, une antenne de réception ou d'émission, ou une nappe de fils connexion permettant au pneumatique de recevoir ou transmettre des informations, avec ou sans patch de contact. On entend par patch de contact, la pastille ou socle, généralement élastomérique, sur laquelle ces éléments sont fixés, de manière amovible ou non, et qui permet la fixation de l'ensemble sur le pneumatique. De tels éléments sont connus de l'homme du métier. On peut citer à titre d'exemples, les éléments décrits dans EP 1 254 787, US 2002 0124934, EP 1 006 167...

Le procédé de marquage d'une partie au moins de la surface d'un pneumatique 1 selon l'invention comprend les étapes suivantes :
- l'apposition du marquage 9 sur la partie supérieure d'une couche de mousse 10 de dimension appropriée formant ainsi un empilement que l'on appellera applique 8,
- fixation de ladite applique 8, par collage de la partie inférieure de ladite couche de mousse 10 sur la partie de la surface du pneumatique 1 à marquer.

Par apposition du marquage, élément et/ou revêtement, on entend la fixation par tout moyen approprié de ce marquage sur la mousse, tels que notamment la décalcomanie, le collage ...

Le procédé de fixation d'un élément rigide, autre qu'un marquage, sur une partie au moins de la surface d'un pneumatique est analogue. Il comprend les étapes de fixation, généralement par collage, de l'élément rigide sur la partie supérieure d'une couche de mousse de dimension appropriée formant une applique, et de fixation de ladite applique, par collage de la partie inférieure de la couche de mousse sur la partie de la surface du pneumatique voulue.

Divers procédés de collage peuvent être utilisés pour le collage de la couche de mousse 10 sur la surface de pneumatique 1, ainsi que pour le collage de la couche supérieure 9 de l'applique 8 (marquage ou autre élément à fixer) sur la couche de mousse 10.

Pour le collage de la mousse sur la surface du pneumatique, la colle devra être élastomérique pour pouvoir suivre les déformations du pneumatique.

Pour le collage de la couche supérieure 9 de l'applique 8 sur la couche de mousse 10, la rigidité de la colle a moins d'importance car la surface supérieure de la couche de mousse 10 en contact avec la couche supérieure 9 de l'applique 8 est peu ou pas déformée.

Pour simplifier la pose, on peut avantageusement utiliser une même colle permettant de constituer une surface adhésive réactivable thermiquement.

Par exemple, on peut utiliser un latex de polyuréthane autoréticulable tel que celui commercialisée par la société AVECIA sous le nom commercial "NEO-REZ R-550 ", en déposant ce dernier sur chacune des surfaces à assembler (surface du pneumatique, les deux surfaces de la couche de mousse et la surface inférieure de la couche supérieure de l'applique). Notons que pour les surfaces ne possédant pas directement de fonctions polaires capables de se lier chimiquement avec le polyuréthane, il faut prévoir un traitement intermédiaire par exemple avec une solution à base d'acide trichloro-isocyanurique (TIC) à 2 ou 3% dans un solvant organique, généralement l'acétate d'éthyle.

On fait ainsi subir un traitement à la surface du pneumatique vulcanisé afin de rendre polaire et fonctionnaliser les élastomères de cette surface. On applique sur cette surface traitée au moins une couche constituée par une dispersion aqueuse de polyuréthane et on laisse sécher cette couche. L'application de la dispersion aqueuse de polyuréthane peut être réalisée à température ambiante. Ainsi ce procédé peut aisément être mis en oeuvre sur le pneumatique vulcanisé et ceci, sans nécessiter par ailleurs, d'opération de chauffage bien qu'il soit possible par une élévation modérée de la température à la surface du pneumatique d'accélérer les opérations de séchage.

On peut également faire appel à des mousses adhésives commerciales encollées avec adhésif acrylique telles que les mousses commercialisées par la société "3M" sous les références 4416 qui est une mousse vinyle et 4965 P qui est une mousse néoprène.

Les exemples qui suivent permettent d'illustrer l'invention sans toutefois la limiter.

### Exemple 1 :

Les échantillons d'applique utilisés pour ces essais ont été collés sur un flanc de pneumatique de type PAX 205-650 R 440, dans la partie radialement inférieure du flanc.

La composition élastomérique de la partie radialement inférieure du flanc est à base d'un coupage d'élastomères contenant du caoutchouc naturel et du polybutadiène, protégé contre l'ozone et l'oxydation par un mélange de 6-PPD, IPPD et TMQ.

Les échantillons d'applique ont été réalisés sous forme de petites plaques en portions de couronne de longueur 70 mm sur une largeur de 5 mm, avec comme couche inférieure en contact avec le pneumatique, une mousse butyle commercialisée sous la dénomination Bib Mousse par la société Michelin à 80% d'élastomère, de masse spécifique 0,13 g/cm3, un taux de vide de 88 % et d'épaisseur 1,9 mm sur laquelle est fixé avec une colle B un élément rigide décoratif A pour lequel plusieurs matériaux ont été testés.

Les matériaux testés pour l'élément rigide décoratif sont les suivants. Les dimensions de ces éléments, en dehors de leur épaisseur, sont les mêmes que celles de la mousse de la couche inférieure :
- A1 : du polycarbonate vendu sous la dénomination Meraklon par la société Bayer, d'épaisseur 0,3 mm.
- A2 : un polyester, le PET (poly éthylène téréphtalate) de 0,5 mm d'épaisseur vendu par la société XTREME
- A3 : un PVC, d'épaisseur 0,3 mm.

Deux modes de collage ont été utilisés :
- Collage B1 : latex polyuréthane vendu sous le nom commercial NEO-REZ R-550 par la société AVECIA pour le collage de l'élément décoratif A sur la mousse et pour le collage de la mousse sur le pneu. Dans ce dernier cas, la surface du pneumatique est traitée par une solution de TIC.
- Collage B2 : pour le collage de l'élément décoratif A sur la mousse et pour le collage de la mousse sur le pneu. Dans ce dernier cas, la surface du pneumatique est d'abord traitée par une solution de TIC puis recouverte d'une colle à base de polyuréthane conforme à l'exemple 1 du document EP 1 178 097, intégré à la présente description par référence.

Ces échantillons ont été comparés à un témoin ne comportant pas la couche inférieure en mousse. A titre de témoin, on a testé l'élément rigide A2 directement collé sur le flanc de pneumatique.

Les pneumatiques portant ces différents échantillons ont été montés sur des véhicules tourisme de type Peugeot 806. Ces véhicules ont été soumis à un roulage sur route à une vitesse maximale de 110 km/h sur une distance comprise entre 1500 ou 2000kms. A l'issue de ce roulage, une première observation des pneumatiques a été réalisée. Puis un deuxième roulage d'environ mille kilomètres supplémentaires a été réalisé dans les même conditions, à l'issue duquel les roues porteuses des pneumatiques ont été démontées afin d'approfondir l'observation des échantillons.

Les résultats obtenus sont portés dans le tableau qui suit.

| **Echantillon** | **Témoin sans mousse** | **A1 avec mousse** | **A2 avec mousse** | **A3 avec mousse** |
|---|---|---|---|---|
| **Elément rigide** | Polyester PET | Polycarbonate | Polyester PET | PVC |
| **Colle** | B1 | B1 | B1 | B2 |
| **1**^{**ère**} **observation** | Décollé à 68 km | RAS* à 2000 km | RAS* à 2000 km | RAS* à 1500 km |
| **2**^{**ème**} **observation** | | RAS* à 3600 km | RAS* à 3600 km | RAS* à 3000 km |

| | | | | |
|---|---|---|---|---|
| RAS : pas de décollage, ni fissuration, ni arrachage | | | | |

On constate que conformément à l'invention, le marquage au moyen d'une applique permet un marquage durable du pneumatique. La couche de mousse permet à l'élément rigide de marquage d'être découplé des déformations du pneumatique, évitant ainsi une rupture ou un décollage dudit élément rigide.

### Exemple 2 :

Lors de nouveaux essais, un échantillon d'applique a été collé sur un flanc de pneumatique de type PAX 205-650 R 440.

La composition élastomérique du flanc est à base d'un coupage d'élastomères contenant du caoutchouc naturel et du polybutadiène, protégé contre l'ozone et l'oxydation par un mélange de 6 PPD, IPPD et TMQ.

On a testé la conservation de l'aspect de cet échantillon en le comparant à un témoin ne comportant pas la couche inférieure de mousse et directement collé sur le flanc de pneumatique.

L'échantillon d'applique a été réalisé sous forme d'une petite plaque en portion de couronne de longueur 70 mm sur une largeur de 5 mm, avec comme couche inférieure en contact avec le pneumatique, une mousse polyuréthane adhésive, associée à un adhésif acrylique, commercialisée par la société "3M" sous la référence réf. 4085. Cette mousse présente une masse spécifique 0,3g/cm3, un taux de vide de 70% et d'épaisseur 1,1 mm.

Sur cette mousse est fixé un élément décoratif élastomérique tachable d'épaisseur de l'ordre de 0,5 mm. Cet élément décoratif, référencé "Mélange" dans le tableau, est réalisé à partir de la composition élastomérique suivante :
- 100 pce Polyisoprène synthétique à 97 % de structure cis-1,4 vendu par la société Nizhnekamsk sous la référence IR6596
- 40 pce Silice Zéosil1165 M de la société Rhodia
- 10 pce Oxyde de titane TiO2 de variété anatase
- 2 pce Péroxyde : 1,4-bis(tertiobutyl péroxy-isopropyl) benzène
- 2 pce noir de carbone N772

L'unité pce signifie partie en poids pour cent partie en poids d'élastomère.

Cet élément est fixé sur la mousse après avoir été traité préalablement par une solution de TIC. L'applique est fixée sur le pneumatique par collage de la face inférieure de la couche de mousse sur le flanc. La surface du pneumatique est traitée préalablement par une solution de TIC.

Le témoin est constitué d'une bande de même dimension de mélange élastomérique constituant l'élément tachable de décoration ci-dessus. Le témoin est collé sur un flanc de pneumatique dans les même conditions de collage au moyen de la colle vendue sous la référence Néo-Rez R.550 par la société AVECIA.

Les pneumatiques portant échantillon et témoin ont été montés sur des véhicules tourisme de type Peugeot 806. Ces véhicules ont été soumis pendant 3 mois à un roulage sur route à une vitesse maximale de 110 km/h sur une distance comprise entre 3000 ou 4000kms. A l'issue de ce roulage, une observation des pneumatiques a été réalisée.

Les résultats obtenus sont portés dans le tableau qui suit.

| **Echantillon** | **Témoin : marquage sans mousse** | **Marquage avec mousse** |
|---|---|---|
| **Couche inférieur** | - | Mousse polyuréthane* |
| **Couche supérieure** | Mélange | Mélange |
| **Observation au bout de 3 mois** | Tachage du marquage | Pas de tachage |

| | | |
|---|---|---|
| *Mousse polyuréthane: réf. 4085 de "3M" | | |

Avec un marquage au moyen de l'applique selon l'invention, on n'observe aucune modification majeure de l'aspect de l'élément rigide de marquage à base d'élastomères. Il ne ternit pas, ni ne se décolore. Sa coloration reste dans la même gamme de couleur qu'avant les tests de roulage.

## Revendications

1. Pneumatique (1) comprenant sur au moins une partie de sa surface au moins une applique (8) composée d'une première couche (9) en contact avec l'air constituant la couche supérieure de l'applique et d'une deuxième couche (10) en contact avec le pneumatique (1) constituant la couche inférieure de l'applique (8), **caractérisé en ce que** ladite couche inférieure (10) de l'applique étant constituée d'une mousse présentant au moins l'une des trois caractéristiques suivantes :
• un taux de vide d'au moins 40%,
• une épaisseur d'au moins 0,5 mm,
• une masse volumique allant de 0,02 g/cm³ à 0,5 g/cm³

2. Pneumatique selon la revendication 1, dans lequel la couche de mousse constituant la couche inférieure (10) de l'applique (8) présente les trois caractéristiques suivantes :
• un taux de vide d'au moins 40%,
• une épaisseur d'au moins 0,5 mm,
• une masse volumique allant de 0,02 g/cm³ à 0,5 g/cm³

3. Pneumatique selon la revendication 1 ou 2, dans lequel la mousse formant la couche inférieure (10) de l'applique (8) est à cellules ouvertes.

4. Pneumatique selon la revendication 1 ou 2, dans lequel la mousse formant la couche inférieure (10) de l'applique (8) est à cellules fermées.

5. Pneumatique selon l'une quelconque des revendications 1 à 4, dans lequel l'applique (8) est fixée sur une partie de la surface extérieure du pneumatique.

6. Pneumatique selon la revendication 5, dans lequel la partie de la surface extérieure du pneumatique (1) est un flanc (3).

7. Pneumatique selon la revendication 5, dans lequel la partie de la surface extérieure du pneumatique est constituée par les fonds de sculptures de la bande de roulement.

8. Pneumatique selon l'une quelconques des revendications 1 à 4, dans lequel l'applique (8) est fixée sur une partie de la surface orientée vers la cavité du pneumatique (1).

9. Pneumatique selon la revendication 8, dans lequel la partie de la surface orientée vers la cavité du pneumatique est la gomme intérieure.

10. Pneumatique selon l'une des revendications précédentes, dans lequel l'applique (8) présente une épaisseur allant de 0,5 mm à 30 mm.

11. Pneumatique selon l'une des revendications 1 à 3, dans lequel la mousse formant la couche inférieure (10) de l'applique (8) est à cellules ouvertes recouverte d'une peau.

12. Pneumatique selon l'une quelconque des revendications 1 à 11, dans lequel la mousse est une mousse élastomérique composée d'au moins un élastomère choisi parmi les élastomères thermodurcissable, les élastomères thermoplastiques, les polyuréthanes, les polyurées et polyuréthane-urées.

13. Pneumatique selon la revendication 12, dans lequel la mousse formant la couche inférieure (10) de l'applique (8) est une mousse élastomérique de masse volumique allant de 0.05 à 0.40 g/cm³.

14. Pneumatique selon la revendication 12, dans lequel la mousse formant la couche inférieure (10) de l'applique (8) est une mousse élastomérique de masse volumique allant de 0.1 à 0.25 g/cm³.

15. Pneumatique selon l'une des revendications 1 à 12, dans lequel la mousse formant la couche inférieure (10) de l'applique (8) est composée d'au moins un matériau plastique et présente une masse volumique allant de 0.02 à 0.1 g/cm³.

16. Pneumatique selon l'une quelconque des revendications 1 à 15, dans lequel la couche supérieure (9) de l'applique (8) comprend au moins un matériau choisi parmi les matériaux plastiques, élastomériques, céramiques et métalliques, colorés ou non.

17. Pneumatique selon l'une quelconque des revendications 1 à 15, dans lequel la couche supérieure (9) de l'applique (8) est constituée d'un revêtement de peinture ou de couche de vernis, coloré ou non.

18. Pneumatique selon l'une quelconque des revendications 1 à 15, dans lequel la couche supérieure (9) de l'applique (8) comprend un élément choisi notamment parmi les capteurs, les puces électroniques, les faisceaux d'alimentation, les connecteurs, les antennes de réception, les antennes d'émission.

## Claims

1. Tyre (1) comprising, on at least part of its surface, at least one appliqué (8) composed of a first layer (9) in contact with the air constituting the top layer of the appliqué and a second layer (10) in contact with the tyre (1) constituting the bottom layer of the appliqué (8), **characterised in that** the said bottom layer (10) of the appliqué consists of a foam having at least one of the following three characteristics:
• a void ratio of at least 40%,
• a thickness of at least 0.5 mm,
• a density ranging from 0.02 g/cm³ to 0.5 g/cm³.

2. Tyre according to Claim 1, in which the layer of foam constituting the bottom layer (10) of the appliqué (8) has the following three characteristics:
• a void ratio of at least 40%,
• a thickness of at least 0.5 mm,
• a density ranging from 0.02 g/cm³ to 0.5 g/cm³.

3. Tyre according to Claim 1 or 2, in which the foam forming the bottom layer (10) of the appliqué (8) is of the open cell type.

4. Tyre according to Claim 1 or 2, in which the foam forming the bottom layer (10) of the appliqué (8) is of the closed cell type.

5. Tyre according to any one of Claims 1 to 4, in which the appliqué (8) is fixed to a part of the external surface of the tyre.

6. Tyre according to Claim 5, in which the part of the external surface of the tyre (1) is a sidewall (3).

7. Tyre according to Claim 5, in which the part of the external surface of the tyre consists of the groove bases of the tread.

8. Tyre according to any one of Claims 1 to 4, in which the appliqué (8) is fixed to part of the surface oriented towards the cavity of the tyre (1).

9. Tyre according to Claim 8, in which the part of the surface oriented towards the cavity of the tyre is the internal rubber compound.

10. Tyre according to one of the preceding claims, in which the appliqué (8) has a thickness ranging from 0.5 mm to 30 mm.

11. Tyre according to one of Claims 1 to 3, in which the foam forming the bottom layer (10) of the appliqué (8) is of the open cell type covered with a skin.

12. Tyre according to any one of Claims 1 to 11, in which the foam is an elastomeric foam composed of at least one elastomer chosen from amongst thermosetting elastomers, thermoplastic elastomers, polyurethanes, polyureas and polyurethane-ureas.

13. Tyre according to Claim 12, in which the foam forming the bottom layer (10) of the appliqué (8) is an elastomeric foam with a density ranging from 0.05 to 0.40 g/cm³.

14. Tyre according to Claim 12, in which the foam forming the bottom layer (10) of the appliqué (8) is an elastomeric foam with a density ranging from 0.1 to 0.25 g/cm³.

15. Tyre according to one of Claims 1 to 12, in which the foam forming the bottom layer (10) of the appliqué (8) is composed of at least one plastics material and has a density ranging from 0.02 to 0.1 g/cm³.

16. Tyre according to any one of Claims 1 to 15, in which the top layer (9) of the appliqué (8) comprises at least one material chosen from amongst plastic, elastomeric, ceramic and metallic materials, whether coloured or not.

17. Tyre according to any one of Claims 1 to 15, in which the top layer (9) of the appliqué (8) consists of a coat of paint or a layer of lacquer, whether coloured or not.

18. Tyre according to any one of Claims 1 to 15, in which the top layer (9) of the appliqué (8) comprises an element chosen in particular from amongst sensors, electronic chips, electrical supply clusters, connectors, reception antennae and transmission antennae.

## Patentansprüche

1. Luftreifen (1), der an mindestens einem Teil seiner Oberfläche mindestens eine Auflage (8) aufweist, die aus einer ersten Lage (9) in Kontakt mit Luft, welche die äußere Lage der Auflage bildet, und einer zweiten Lage (10) in Kontakt mit dem Luftreifen (1) zusammengesetzt ist, die die innere Lage der Auflage (8) bildet, **dadurch gekennzeichnet, dass** die innere Lage (10) der Auflage aus einem Schaum besteht, der mindestens eine der drei folgenden Eigenschaften aufweist:
• einen Hohlraumgehalt von mindestens 40 %,
• eine Dicke von mindestens 0,5 mm,
• eine Dichte von 0,02 bis 0,5 g/cm³.

2. Luftreifen nach Anspruch 1, wobei die Schaumlage, die die innere Lage (10) der Auflage (8) bildet, die folgenden drei Eigenschaften aufweist:
• einen Hohlraumgehalt von mindestens 40 %,
• eine Dicke von mindestens 0,5 mm,
• eine Dichte von 0,02 bis 0,5 g/cm³.

3. Luftreifen nach Anspruch 1 oder 2, wobei der Schaum, der die innere Lage (10) der Auflage (8) bildet, offenzellig ist.

4. Luftreifen nach Anspruch 1 oder 2, wobei der Schaum, der die innere Lage (10) der Auflage (8) bildet, geschlossenzellig ist.

5. Luftreifen nach einem der Ansprüche 1 bis 4, wobei die Auflage (8) an einem Teil der äußeren Oberfläche des Luftreifens befestigt ist.

6. Luftreifen nach Anspruch 5, wobei der äußere Bereich der Oberfläche des Luftreifens (1) eine Flanke (3) ist.

7. Luftreifen nach Anspruch 5, wobei der Bereich der äußeren Oberfläche des Luftreifens aus dem Boden des Profils des Laufstreifens besteht.

8. Luftreifen nach einem der Ansprüche 1 bis 4, wobei die Auflage (8) an einem Bereich der Oberfläche befestigt ist, die in Richtung des Hohlraums des Luftreifens (1) orientiert ist.

9. Luftreifen nach Anspruch 8, wobei der Bereich der Oberfläche, der in Richtung des Hohlraums des Luftreifens orientiert ist, die Innenseele ist.

10. Luftreifen nach einem der vorhergehenden Ansprüche, wobei die Auflage (8) eine Dicke von 0,5 bis 30 mm aufweist.

11. Luftreifen nach einem der Ansprüche 1 bis 3, wobei der Schaum, der die innere Lage (10) der Auflage (8) bildet, offenzellig und mit einer Umhüllung bedeckt ist.

12. Luftreifen nach einem der Ansprüche 1 bis 11, wobei der Schaum ein Elastomerschaum ist, der aus mindestens einem Elastomer besteht, das unter den wärmehärtbaren Elastomeren, thermoplastischen Elastomeren, Polyurethanen, Polyharnstoffen und Polyurethanharnstoffen ausgewählt ist.

13. Luftreifen nach Anspruch 12, wobei der Schaum, der die innere Lage (10) der Auflage (8) bildet, ein Elastomerschaum mit einer Dichte von 0,05 bis 0,40 g/cm³ ist.

14. Luftreifen nach Anspruch 12, wobei der Schaum, der die innere Lage (10) der Auflage (8) bildet, ein Elastomerschaum mit einer Dichte von 0,1 bis 0,25 g/cm³ ist.

15. Luftreifen nach einem der Ansprüche 1 bis 12, wobei der Schaum, der die innere Lage (10) der Auflage (8) bildet, aus mindestens einem Kunststoff aufgebaut ist und eine Dichte von 0,02 bis 0,1 g/cm³ aufweist.

16. Luftreifen nach einem der Ansprüche 1 bis 15, wobei die äußere Lage (9) der Auflage (8) mindestens einen Stoff enthält, der unter den Kunststoffen, elastomeren, keramischen und metallischen Materialien, die farbig oder nicht farbig sind, ausgewählt ist.

17. Luftreifen nach einem der Ansprüche 1 bis 15, bei dem die äußere Lage (9) der Auflage (8) aus einer farbigen oder nicht farbigen Farbschicht oder Lackschicht besteht.

18. Luftreifen nach einem der Ansprüche 1 bis 15, wobei die äußere Lage (9) der Auflage (8) ein Element enthält, das insbesondere unter den Sensoren, elektronischen Chips, Versorgungsnetzen, Anschlüssen, Empfangsantennen und Sendeantennen ausgewählt ist.
